**Europäisches Patentamt**

**European Patent Office**

**Office européen des brevets**

(11) Veröffentlichungsnummer: **0 356 715 B1**

## EUROPÄISCHE PATENTSCHRIFT

(45) Veröffentlichungstag der Patentschrift: **16.06.93**

(51) Int. Cl.⁵: **C09J 201/06**, C09J 5/00, C08J 3/24

(21) Anmeldenummer: **89113949.5**

(22) Anmeldetag: **28.07.89**

(54) **Vorgelierbarer Klebstoff.**

(30) Priorität: **05.08.88 FR 8810636**

(43) Veröffentlichungstag der Anmeldung:
**07.03.90 Patentblatt 90/10**

(45) Bekanntmachung des Hinweises auf die
Patenterteilung:
**16.06.93 Patentblatt 93/24**

(84) Benannte Vertragsstaaten:
**BE DE FR GB IT NL SE**

(56) Entgegenhaltungen:
**EP-A- 0 181 441**
**EP-A- 0 256 316**
**US-A- 2 921 043**
**US-A- 4 661 554**

(73) Patentinhaber: **Henkel Kommanditgesellschaft
auf Aktien
Henkelstrasse 67
W-4000 Düsseldorf 13(DE)**

(72) Erfinder: **Lanoye, Thierry
108 bis rue 4 fils Doumer
F-58200 Cosne-sur-Loire(FR)**
Erfinder: **Garnault, Anne-Marie
Les Babises
F-58200 Alligny-Cosne(FR)**

**Beschreibung**

Die Erfindung betrifft einen Klebstoff, insbesondere für den Automobilbau, der durch 2 unterschiedliche, nacheinander aktivierbare chemische Reaktionen aushärtet. Im engeren Sinne werden Klebstoffe auf Basis von Mischungen aus 2 Polymeren, die durch eine Veresterungsreaktion oder ähnliches miteinander verbunden werden können beschrieben, wobei die Mischung nach der Veresterungsreaktion zusätzlich vulkanisiert werden kann.

Im Automobilbau ist es wünschenswert, Klebstoffe zusammen mit den Lacken bei höheren Temperaturen zu härten. Da vor dem Lackieren jedoch Reinigungsoperationen nötig sind und ein Verkleben nach diesen Reinigungsoperationen nicht mehr durchgeführt werden kann, müssen die hier eingesetzten Klebstoffe bereits kurze Zeit nach dem Auftragen eine so hohe Festigkeit aufweisen, daß die Klebeverbunde beim Reinigen der zu lackierenden Karosserie weder sich lösen noch verrutschen.

Um dies zu erreichen, wurden für diesen Anwendungszweck bereits zahlreiche unterschiedliche Klebstofftypen vorgeschlagen. So ist es beispielsweise möglich, mit 2-komponentigen Polyurethanklebstoffen frühzeitig ausreichende Festigkeit zu erhalten. Nachteilig ist hierbei jedoch, daß die ausgehärteten Polyurethanklebstoffe schwer gegen Hydrolyse oder ähnliche Alterungseinflüsse stabilisiert werden können. Ein weiterer Nachteil ist, daß die beiden Komponenten, nämlich Polydiisocyanate und Polyole in recht exakten Mengenverhältnissen eingesetzt werden müssen, da sonst Klebeversagen resultiert. Dies ist in der Praxis umso schwerer, als meistens die beiden Komponenten unterschiedliche Viskosität aufweisen und daher genau arbeitende Dosier- und Mischeinrichtungen verwendet werden müssen. Das gleiche gilt sinngemäß auch für 2-komponentige Epoxidharzsysteme.

Weitere hier übliche Klebstoffe sind die Plastisole. Es sind dies Mischungen von Polymeren mit einem Lösungsmittel, wobei Polymer und Lösungsmittel so aufeinander abgestimmt sind, daß bei Raumtemperatur die Dispersion eines Polymeren in dem organischen Lösungsmittel vorliegt und beim Erwärmen ein Lösevorgang stattfindet, so daß letztendlich ein Polymer in gequollenem Zustand vorliegt. Nachteil derartiger Plastisole ist die geringe Variabilität der Systeme, worunter zu verstehen ist, daß die Polymeren nur dann den klebetechnischen Erfodernissen angepaßt werden können, wenn dadurch die für die Gelierbarkeit wichtigen Löslichkeitseigenschaften nicht verloren gehen. Ein weiterer Nachteil liegt darin, daß Plastisole unter zusätzlichem Energieaufwand, vor dem Einbrennen der Lackierung, in Induktionsöfen oder ähnlichen Vorrichtungen gehärtet werden müssen.

Schließlich sind nach Art von Plastisolen formulierte Epoxidharzklebstoffe bekannt. Bei derartigen Systemem ist es jedoch äußerst schwierig die Reaktivität so einzustellen, daß die Lagerstabilität einerseits und die Reaktivität im Induktionsofen andererseits gegeben sind.

Bekannt sind schließlich Polybutadiene mit Hydroxylgruppen und Polybutadiene mit Säureanhydridgruppen, die durch Mischen zur Reaktion gebracht werden können, wobei zur Reaktionsbeschleunigung saure oder basische Katalysatoren zugegeben werden können. Es ist indes nicht vorbekannt, aus derartigen Mischungen Klebstoffe zu formulieren, die nach der Vorgelierung durch Vulkanisation gehärtet werden können.

Vor dem Hintergrund dieses Standes der Technik haben sich die Erfinder die Aufgabe gestellt, ein 2-komponentiges Klebstoffsystem zu schaffen, das nach 2 unterschiedlichen chemischen Reaktionsmechanismen, die nacheinander aktivierbar und zumindest weitgehend unabhängig voneinander katalysierbar sind, aushärtet. Dabei sollte das Klebstoffsystem hohe Verarbeitungstoleranzen, insbesondere im Hinblick auf das Mischungsverhältnis der beiden Komponenten, aufweisen. Weiterhin sollte dann die Geliergeschwindigkeit einstellbar sein. Schließlich sollte der ausgehärtete Klebstoff den in der Automobilindustrie üblichen Anforderungen an Hydrolyse- und Alterungsstabilität sowie der dort üblichen Temperaturstabilität genügen.

Gegenstand der Erfindung sind somit flüssige oder streichfähige vulkanisierbare Kautschukmischungen auf Basis von mehreren Polymeren, von denen zumindest eines olefinisch ungesättigt ist, dadurch gekennzeichnet, daß sie enthalten

- 30 - 70 Gew.-Teile eines Polymeren A mit im Mittel mindestens 2 Hydroxylgruppen pro Makromolekül
- 70 - 30 Gew.-Teile eines mit A verträglichen Polymeren B mit im Mittel mindestens 2 Carbonsäure- und/oder Carbonsäureanhydridgruppen oder zumindest einer Carbonsäure und einer Carbonsäureanhydridgruppe pro Molekül
- 10 - 120 Gew.-Teile Vulkanisationshilfsmittel und gewünschtenfalls Füllstoffe und/oder Hilfsstoffe und
- gewünschtenfalls 0,1 - 5 Gew.-Teile Veresterungskatalysatoren,

wobei zumindest eines der Polymeren A oder B unter üblichen Reaktionsbedindungen bei erhöhten Temperaturen über seine olefinischen Doppelbindungen vulkanisierbar ist, wobei nur eine der Komponenten A oder B sich von einem vulkanisierbaren Polydien ableitet, die andere aber ein damit verträgliches Polyamid, einen Polyester oder ein Copolymerisat jeweils mit OH- und/oder Carbonsäure- oder Carbonsäureanhydridgruppen darstellt, oder die Polymeren A und B sich von Polydienen oder deren Copolymeren ableiten,

Ein weiterer Gegenstand der Erfindung ist ein Verfahren zur Herstellung eines Klebeverbundes zwischen vulkanisationsstabilen Substraten, dadurch gekennzeichnet, daß man ein Polymer A, welches gelöst oder beigemengt Veresterungskatalysatoren und/oder Oxidationsinhibitoren enthält mit einem Polymer B, welches gelöst und/oder beigement, Vulkanisationshilfsmittel und gewünschtenfalls Füll- und/oder Hilfsstoffe enthält, zu einer Kautschukmischung innig vermengt, auf die zu verklebenden Substrate aufträgt, die Substrate zusammenfügt, den Verbund bei Raumtemperatur oder kurz darüber, aber in jedem Falle unterhalb der Vulkanisationstemperatur, einer Vorhärtung unterzieht, und sodann gewünschtenfalls nach Zwischenlagerung auf Vulkanisationstemperatur bringt und dabei aushärtet.

In ihrer weitesten Ausführungsform betrifft die Erfindung den Gedanken, als Klebstoff ein 2-komponentiges System einzusetzen, das beim Vermischen der beiden Komponenten vorgeliert und das anschließend durch einen zweiten Härtungsmechanismus endgehärtet werden kann. Ein bevorzugter Mechanismus für den zweiten Härtungsmechanismus ist die Vulkanisation. Mögliche chemische Reaktionen für die Vorgelierung, also den ersten Härtungsmechanismus sind Reaktionen, die beispielsweise zur Bildung von Estergruppen führen können, insbesondere die Veresterung von Carbonsäureanhydriden mit polymer gebundenen Hydroxylgruppen, die Veresterung von Carbonsäuren- oder auch Umesterungsreaktionen.

Die im System vorhandenen Polymeren A und B müssen daher zum einen chemische Gruppen tragen, die bei der Vorgelierung reagieren; zum anderen muß jedoch mindestens eine der Komponenten A oder B auch chemische Gruppen tragen, die bei der Durchhärtung, also z.B. bei der Vulkanisation reagieren.

So trägt das Polymer A im Mittel mindestens 2 Hydroxylgruppen pro Makromolekül. Es können jedoch insbesondere bei höheren Polymerisationsgraden auch mehr als 2 Hydroxylgruppen vorhanden sein. Die Hydroxylgruppen können endständig an den Kettenenden oder an den Enden von Seitengruppen eingefügt sein, sie können aber auch direkt an der Kette liegen. Das Polymer A kann Doppelbindungen die vulkanisierbar sind, enthalten und muß vulkanisierbare Doppelbindungen dann enthalten, wenn das Polymer B keine solche vulkanisierbaren Doppelbindungen enthält. Ebenso kann das Polymer B Doppelbindungen enthalten, die vulkanisierbar sind und muß solche enthalten, wenn Polymer A keine derartigen Doppelbindungen enthält. Polymer B enthält im Mittel 2 Carbonsäure- und/oder Carbonsäureanhydridgruppen pro Molekül oder aber eine oder mehrere Carbonsäuregruppen und eine oder mehrere Carbonsäureanhydridgruppen pro Molekül. Bei Herstellung der Polymermischungen hat der Fachmann in jedem Falle darauf zu achten, daß die Polymeren A und B miteinander verträglich sind, d.h. die Polymeren dürfen sich nicht entmischen.

Bevorzugte Materialien für die Polymeren A und B sind flüssige Polybutadiene. Verwendet werden können jedoch auch Copolymere auf Basis von Butadien und Olefinen oder von Isopren, die gewünschtenfalls anteilsweise noch weitere Monomere enthalten können, so Copolymere von Butadien und Olefinen. Unter diesen Verbindungen sind solche weniger bevorzugt, die Halogen enthalten.

Wird auf Hydrolysestabilität weniger Wert gelegt, so können auch verträgliche Polyester und/oder Polyamide mit den entsprechenden Endgruppen als Polymer A oder Polymer B eingesetzt werden.

Nach einer bevorzugten Ausführungsform der Erfindung stellt Polymer A ein Polybutadien mit end- oder innenständigen Hydroxylgruppen und Polymer B ein Polybutadien mit Carbonsäureanhydridgruppen dar. Vorzugsweise werden dabei Polybutadiene ausgewählt, die ein Molekulargewicht $M_n$ (Dampfdruck osmometrisch bestimmt) im Bereich zwischen 1.000 und 3.500, vorzugsweise zwischen 1.500 und 2.000, aufweisen. Geeignete Produkte haben Säurezahlen zwischen 50 und 200, vorzugsweise zwischen 70 und 160 (als Polymer B). Die Hydroxylzahlen des Polymer A bewegen sich vorzugsweise zwischen 25 und 75.

Nach einer bevorzugten Ausführungsform der Erfindung werden als Polymer B Polymere eingesetzt, die Carbonsäureanhydridgruppen enthalten. Bei der Berechnung der Molverhältnisse von Polymer A zu Polymer B wird dabei davon ausgegangen, daß pro Hydroxylgruppe eine Carbonsäureanhydridgruppe verbraucht wird.

Setzt man als Polymer B eine Komponente ein, die nur Carboxylgruppen, aber keine Carbonsäureanhydridgruppen, enthält, so ist ein Verhältnis Hydroxylgruppen zu Carboxylgruppen zwischen 0,5 : 1 und 2 : 1 bevorzugt. Setzt man als Polymer B eine Komponente ein, die Carbonsäureanhydridgruppen enthält, so kann das Verhältnis von Hydroxylgruppen zu Carbonsäureanhydridgruppen von 0,5 : 1 bis 2 : 1 variiert werden. Bevorzugt ist in beiden Fällen ein Verhältnis von 0,7 : 1 bis 1,5 : 1.

Zur Katalyse der Vorgelierungsreaktion enthalten die erfindungsgemäßen Kautschukmischungen Veresterungskatalysatoren. Bevorzugt sind hier basische Veresterungskatalysatoren, jedoch können, falls keine Metalle verklebt werden sollen, auch saure Veresterungskatalysatoren eingesetzt werden, falls dies gewünscht und mit den Vulkanisationssystemen verträglich ist. Bevorzugte basische Veresterungskatalysatoren sind Amine und unter diesen insbesondere sekundäre und tertiäre aliphatische Amine, wie beispielsweise n-Dibutylamin, Dimethylcyclohexylamin, Dimethylamin, Diethylamin, Triethylamin, Tri-n-propylamin und/oder N-Alkylmorpholine, insbesondere die Methyl-, Ethyl- oder Propylverbindung. Die basischen Veresterungskatalysatoren werden nach Reaktivität und gewünschter Vorgelierzeit in Mengen zwischen 0,1 Gew.-% und 5 Gew.-%, bezogen auf Polymer A und B, eingesetzt.

Als Vulkanisationssystem enthalten die erfindungsgemäßen Kautschukmischungen die hier dem Fachmann bekannten Vulkanisationshilfsmittel, Katalysatoren und Beschleuniger, also z.B. Mischungen aus Schwefel und Mercapto-benzodiazol-disulfit, gewünschtenfalls in Abmischung mit aktiven Füllstoffen, wie beispielsweise aktivem Zinkoxid und dergleichen. Hier werden die bei der Vulkanisation üblichen Mengen eingesetzt.

Die erfindungsgemäßen Kautschukmischungen können darüber hinaus auch Füllstoffe enthalten, so z.B. Calciumcarbonat, Ruß, porogene Kieselsäure, Talcum und dergleichen. Die Füllstoffe werden in Mengen von 20 bis 80 Gew.-%, bezogen auf Polymer A und B, eingesetzt.

Weiterhin können auch noch Hilfsstoffe anwesend sein, so z.B. Oxidationsinhibitoren und/oder Pigmente. Als Oxidationsinhibitoren werden hier die bei den der Mischung zugrundeliegenden Kautschukkomponenten üblichen Oxidationsinhibitoren verwendet, so beispielsweise Verbindungen wie Tetrakis(-methylen-3,5-ditertiärbutyl-4-hydroxy-hydrocinnamat)-methan. Die Menge beträgt 0,1 bis 3 Gew.-%, bezogen auf Polymer A und B.

Zur Herstellung der erfindungsgemäßen Kautschukmischungen hat es sich als zweckmäßig erwiesen, dem Polymere A, also dem hydroxylgruppenhaltigen Polymer, die Veresterungskatalysatoren und gewünschtenfalls die Oxidationsinhibitoren zuzufügen. Weiterhin hat es sich als zweckmäßig erwiesen, dem Polymer B das Vulkanisationssystem und gewünschtenfalls weitere Hilfsstoffe zuzufügen. Andererseits ist es doch auch möglich, den Vulkanisator nur in das Polymer A einzubinden oder hälftig in beiden Polymeren zu konfektionieren. Der Vulkanisatorgehalt beträgt zwischen 8 und mehr als 20 Gew.-Teile pro 200 Gew.-Teile Polymermischung. Die Vulkanisationstemperaturen liegen zwischen 160 und 220°C, die Zeiten zwischen wenigen Minuten und mehr als 1 Stunde. Insbesondere Füllstoffe können beiden Polymeren zugefügt werden. Die mit den genannten Komponenten vermischten Polymeren A bzw. B sind bis zur Anwendung getrennt zu lagern (2-Komponenten-System).

Nach dem Vermischen im geeigneten Verhältnis werden die Kautschukmischungen auf die zu verklebenden Substrate aufgetragen. Bereits nach dem Vermischen beginnt die Vorgelierungsreaktion durch Veresterung, die durch den Veresterungskatalysator, etwa das eingesetzte Amin, in ihrem Zeitablauf gesteuert werden kann.

Die erfindungsgemäßen Kautschukmischungen erreichen dabei innerhalb von wenigen Minuten eine Festigkeit, die neuverklebte Automobilteile den mechanischen Belastungen der Karosseriereinigung vor der Lackierung widerstehen lassen.

Nach oder während der Vorgelierungsreaktion werden die erfindungsgemäßen Kautschukmischungen dann auf Vulkanisationstemperatur gebracht und bei dieser unter üblichen Vulkanisationsbedingungen ausgehärtet.

Neben den günstigen Klebeeigenschaften liegt ein besonderer Vorteil der erfindungsgemäßen Produkte in der guten Beherrschbarkeit der verschiedenen Härtungsreaktionen sowie in der Tatsache, daß keine Lösungsmittel mitverwendet werden.

## Beispiele

Es wurden eine Reihe von Kautschukmischungen hergestellt. Als Polymer A wurde ein hydroxylgruppenhaltiges Polybutadien (PBH) mit den folgenden Eigenschaften eingesetzt:
Molekulargewicht (Dampfdruck osmometrisch ca. 3000, Viskosität bei 20°C ca. 350 dPas, Dichte ca. 0,94 g/cm$^3$, Hydroxylzahl ca. 48 mg KOH/g.

Als Polymer B wurden 2 unterschiedliche Polybutadiene mit Carbonsäureanhydridgruppeneingesetzt.
Eigenschaften von PBA1: Molekulargewicht Dampfdruck osmometrisch 1700, Viskosität 2200 dPa S bei 20°C, Dichte ca. 0,97, Säurezahl 150 mg KOH/g.

Polybutadien PBA2: Molekulargewicht ca. 1700, Viskosität 54 dPa S bei 20°C, Dichte 0,94, Säurezahl ca. 70 mg KOH/g.

Als Oxidationsinhibitor wurde Tetrakis-(methylen-3,5-di-tertiär-butyl-4-hydroxyhydrocinnamat-) methan eingesetzt. Als Füllstoff diente aktives Zinkoxid, als Pigment Ruß, Vulkanisationsmittel war eine Mischung auf Basis Schwefel/Mercaptobenzotiazol-disulfit. Schließlich wurde als Katalysator Di-n-butylamin zugesetzt. Zur Herstellung der jeweiligen Komponente A wurden die Feststoffe eingewogen, das Polybutadien zugegeben und anschließend der Katalysator für die Vorgelierung zugefügt. Dabei erfolgte die Vermischung in einem Z-Kneter.

4

Zur Herstellung der jeweiligen Komponente B wurde das Vulkanisationsmittel in das Polybutadien eingetragen und diese Mischung zu den anderen festen Bestandteilen zugefügt.

**Beispiel 1**

|  | A |  | B |
| --- | --- | --- | --- |
| PBH | 43,9 | PBA$_1$ | 43,5 |
| Oxidationsinhibitor | 1,5 | Oxidationsinhibitor | 1,0 |
| Füllstoffe | 54,6 | Füllstoffe | 55,5 |

**Beispiel 2**

|  | A |  | B |
| --- | --- | --- | --- |
| PBH | 39,1 | PBA$_1$ | 43,5 |
| Oxidationsinhibitor | 1,0 | Oxidationsinhibitor | 1,0 |
| Füllstoffe | 49,6 | Füllstoffe | 55,5 |
| Vulkanisationsmittel | 10,3 |  |  |

**Beispiel 3**

|  | A |  | B |
| --- | --- | --- | --- |
| PBH | 37,6 | PBA$_1$ | 43,6 |
| Oxidationsinhibitor | 0,9 | Oxidationsinhibitor | 1,0 |
| Füllstoffe | 46,4 | Füllstoffe | 55,4 |
| Pigment | 4,3 |  |  |
| Vulkanisationsmittel | 10,8 |  |  |

**Beispiel 4**

|  | A |  | B |
| --- | --- | --- | --- |
| PBH | 39,4 | PBA$_2$ | 42,7 |
| Oxidationsinhibitor | 1,1 | Oxidationsinhibitor | 1,9 |
| Füllstoffe | 49,1 | Füllstoffe | 54,7 |
| Pigment | 0,7 | Pigment | 0,7 |
| Vulkanisationsmittel | 9,7 |  |  |

. . .

5

## Beispiel 5

| PBH | 38,5 | PBA$_2$ | 38,4 |
|---|---|---|---|
| Oxidationsinhibitor | 1,0 | Oxidationsinhibitor | 1,0 |
| Füllstoffe | 48,6 | Füllstoffe | 48,5 |
| Pigment | 1,0 | Pigment | 2,4 |
| Vulkanisationsmittel | 10,9 | Vulkanisationsmittel | 9,7 |

## Beispiel 6

| PBH | 41,0 | PBA$_2$ | 40,8 |
|---|---|---|---|
| Oxidationsinhibitor | 1,0 | Oxidationsinhibitor | 1,3 |
| Füllstoffe | 51,5 | Füllstoffe | 51,8 |
| Pigment | 1,2 | Pigment | 0,9 |
| Vulkanisationsmittel | 5,3 | Vulkanisationsmittel | 5,2 |

## Beispiel 7

| PBH | 35,0 | PBA$_2$ | 43.7 |
|---|---|---|---|
| Oxidationsinhibitor | 0,9 | Oxidationsinhibitor | 1,5 |
| Füllstoffe | 46,3 | Füllstoffe | 54,0 |
| Pigment | 0,6 | Pigment | 0,8 |
| Vulkanisationsmittel | 17,2 | | |

## Beispiel 8

| PBH | 39,3 | PBA$_2$ | 39,3 |
|---|---|---|---|
| Oxidationsinhibitor | 1,0 | Oxidationsinhibitor | 1,1 |
| Füllstoffe | 49,2 | Füllstoffe | 49,1 |
| Pigment | 0,7 | Pigment | 0,7 |
| Vulkanisationsmittel | 9,8 | Vulkanisationsmittel | 9,8 |

. . .

6

### Beispiel 9

| | | | |
|---|---|---|---|
| PBH | 38,7 | PBA$_2$ | 39,3 |
| Oxidationsinhibitor | 1,0 | Oxidationsinhibitor | 1,0 |
| Füllstoffe | 48,2 | Füllstoffe | 49,3 |
| Pigment | 0,7 | Pigment | 0,7 |
| Katalysator | 1,7 | Vulkanisationsmittel | 9,7 |
| Vulkanisationsmittel | 9,7 | | |

### Beispiel 10

| | | | |
|---|---|---|---|
| PBH | 39,0 | PBA$_2$ | 39,3 |
| Oxidationsinhibitor | 1,0 | Oxidationsinhibitor | 1,0 |
| Füllstoffe | 48,8 | Füllstoffe | 49,1 |
| Pigment | 0,7 | Pigment | 0,7 |
| Katalysator | 0,8 | Vulkanisationsmittel | 9,9 |
| Vulkanisationsmittel | 9,7 | | |

### Beispiel 11

| | | | |
|---|---|---|---|
| PBH | 39,3 | PBA$_2$ | 39,3 |
| Oxidationsinhibitor | 1,0 | Oxidationsinhibitor | 1,0 |
| Füllstoffe | 49,0 | Füllstoffe | 49,1 |
| Pigment | 0,7 | Pigment | 0,7 |
| Vulkanisationsmittel | 10,0 | Vulkanisationsmittel | 9,9 |

. . .

## Beispiel 12

| PBH | 43,2 | $PBA_2$ | 35,9 |
|---|---|---|---|
| Oxidationsinhibitor | 1,0 | Oxidationsinhibitor | 0,9 |
| Füllstoffe | 54,2 | Füllstoffe | 44,8 |
| Pigment | 0,8 | Pigment | 0,6 |
| Katalysator | 0,8 | Vulkanisationsmittel | 17,8 |

## Beispiel 13

| PBH | 42,2 | $PBA_2$ | 53,2 |
|---|---|---|---|
| Oxidationsinhibitor | 1,0 | Oxidationsinhibitor | 0,6 |
| Füllstoffe | 52,7 | Füllstoffe | 31,6 |
| Pigment | 0,8 | Pigment | 0,4 |
| Katalysator | 0,9 | Kieselsäure | 1,8 |
| Kieselsäure | 2,4 | Vulkanisationsmittel | 12,4 |

## Beispiel 14

| PBH | 43,9 | $PBA_2$ | 43,9 |
|---|---|---|---|
| Oxidationsinhibitor | 1,0 | Oxidationsinhibitor | 0,5 |
| Füllstoffe | 51,1 | Füllstoffe | 28,8 |
| Pigment | 0,8 | Pigment | 0,4 |
| Katalysator | 0,7 | Kieselsäure | 5,8 |
| Kieselsäure | 2,4 | Vulkanisationsmittel | 20,6 |

PBH : Polybutadien mit Hydroxyl-Gruppen

PBA : Polybutadien mit Anhydrid-Gruppen

Alle Angaben in Gewichtsteilen

. . .

Zu Beispiel 1

Die Mischungen A und B aus Beispiel 1, die kein Vulkanisationsmittel enthalten, wurden miteinander vermengt und es wurden unterschiedliche Mengen an Di-n-butylamin als Katalysator für die Vorgelierung

8

zugegeben. Es wurde visuell die Abbindezeit in Abhängigkeit der Katalysatormenge bestimmt, wobei die folgenden Werte erhalten wurden:

| % Katalysator / Mischung A + B | Abbindezeit |
|---|---|
| 1,6 | 2 Minuten |
| 1,3 | 4 Minuten |
| 0,8 | 7 Minuten |
| 0,4 | 24 Minuten |
| 0 | mehrere Tage |

Zu Beispiel 2

Die Komponenten A + B gemäß Beispiel wurden zu einer erfindungsgemäßen Kautschukmischung vermischt und es wurden damit 2 mm dicke Dichtungsmaterialien auf ZES-Stahlplatten geklebt. Die Aushärtung erfolgte bei 170°C während 25 Minuten. Die Zugscherfestigkeit betrugt 16 daN/cm$^2$. Das Bruchbild war Adhaesions-und Kohäsionsbruch im Dichtungsmaterial.

Zu Beispiel 3

Die Kautschukmischungen gemäß Formulierung des Beispiels 3 wurden für Verklebung von Dichtungsmaterial mit ZES-Stahlplatten oder einseitig verzinkten Stahlplatten eingesetzt. Gehärtet wurde zum einen bei 170°C während 25 Minuten, zum anderen bei 200°C während 1 Stunde. Bestimmt wurden die Zugscherfestigkeiten der Verklebung nach einem Tag Lagerung bei Raumtemperatur bzw. nach 7 Tagen Feuchtlagerung bei 70°C. Es wurden die folgende Werte erhalten.

| SUBSTRAT 1 (Aushärtung) | ZUGSCHERFESTIGKEIT nach einem Tag bei Raumtemperatur (daN/cm²) | ZUGSCHERFESTIGKEIT nach Feuchtlagerung 7 Tage bei 70°C (daN/cm²) | Änderung |
|---|---|---|---|
| ZES Stahlplatten (25 Minuten bei 170°C) | 16,8 | 17,2 | + 2 % |
| ZES Stahlplatten (1 Stunde bei 200°C) | 21,0 | 21,5 | + 2,4 % |
| Einseitigverzinkte (25 Minuten bei 170°C) | 17,6 | 20,5 | + 16,5 % |

EP 0 356 715 B1

Zu Beispiel 4

Mit den Mischungen gemäß Beispiel 4 wurden die folgende Werte erhalten:

| Substrat (Aushärtung) | Zugscherfestigkeit (daN/cm$^2$) | Zugscherfestigkeit nach Alterung (daN/cm$^2$) |
|---|---|---|
| ZES 25 Min. bei 170°C | 10,7 | 12,3 |
| ZES 1 Std. bei 200°C | 18,9 | 15,0 |
| einseitig verzinkt 25 Min. bei 170°C | 9,7 | 12,6 |
| einseitig verzinkt 1 Std. bei 200°C | 14,2 | 16,0 |

Mit den Mischungen aus den Beispielen 4 bis 8 und 12 und 13 wurde sodann der Einfluß einer Variation der Zugabe des Vulkanisationsmittels zu dem jeweiligen Teil A und B untersucht. Die folgenden Werte wurden erhalten:

| | | Beispiel 4 | | | Beispiel 5 | | | Beispiel 6 | | | Beispiel 7 | | |
|---|---|---|---|---|---|---|---|---|---|---|---|---|---|
| % Vulkanisations-mittel | A | 9,7 | | | 10,9 | | | 5,3 | | | 17,2 | | |
| | B | 0 | | | 9,7 | | | 5,2 | | | 0 | | |
| | | $H_0$ | $H_7$ | | $H_0$ | $H_7$ | | $H_0$ | $H_7$ | | $H_0$ | $H_7$ | |
| ZES 25 mn bei 170°C | | 10,7 | 12,3 | + 15 % | 22,4 | 20,3 | - 9,4 % | 12,4 | 15,6 | + 25,8 % | 23,3 | 19,7 | - 15,5 % |
| ZES 1 Stunde bei 200°C | | 18,9 | 15,0 | - 20,6 % | 22,6 | 26,7 | + 18,1 % | 19,0 | 18,3 | - 3,7 % | 28,5 | 29,0 | + 1,8 % |
| G1 25 mn bei 170°C | | 9,7 | 12,6 | + 30 % | / | / | / | / | / | / | / | / | |
| G1 1 Stunde bei 200°C | | 14,2 | 16,0 | + 12,7 | / | / | / | / | / | / | / | / | |

EP 0 356 715 B1

Erläuterungen:

Ergebnisse Zugscherfestigkeit (daN/cm²)

ZES : ZES Stahlplatten (Dicke : 0,8 mm)

G1 : einseitigverzinkte Blechplatten

$H_0$ = Messung nach 1 Tag Raumtemperatur

$H^7$ = Messung nach Feuchtlagerung bei 70°C

| | Beispiel 8 | | | Beispiel 12 | | | Beispiel 13 | | |
|---|---|---|---|---|---|---|---|---|---|
| % Vulkanisations-mittel A | 9,8 | | | 0 | | | 0 | | |
| % Vulkanisations-mittel B | 9,8 | | | 17,8 | | | 12,4 | | |
| | $H_0$ | $H^7$ | | $H_0$ | $H^7$ | | $H_0$ | $H^7$ | |
| ZES 25 mn bei 170°C | 19,7 | 17,2 | - 12,7 % | 21,3 | 22,7 | + 6,6 % | 18,7 | 20,7 | + 10,7 % |
| ZES 1 Stunde bei 200°C | 24,3 | 19,8 | - 18,5 % | / | / | | 22,6 | 22,7 | + 0,4 % |
| G1 25 mn bei 170°C | 21,2 | 20,0 | - 5,7 % | / | / | | / | / | |
| G1 1 Stunde bei 200°C | 22,1 | 20,4 | - 7,7 % | / | / | | / | / | |

Die dargestellten Ergebnisse zeigen, daß generell Vulkanisationsmittel und Katalysator dem Polymer A oder dem Polymer B oder beiden zugefügt werden kann. Es hat sich aus Gründen der Lagerstabilität als günstig erwiesen, den Katalysator der Komponente A, jedoch das Vulkanisationsmittel der Komponente B zuzuschlagen.

Zu Beispiel 8

Mit der Mischung aus Beispiel 8 wurde zur Bestimmung des Alterungsverhaltens der Feuchtlagertest bei 70 °C bis zu 21 Tagen ausgedehnt. Die folgenden Werte wurden erhalten:

| Substrat (Aushärtung) | vor der Alterung (daN/cm²) | nach 7 Tagen Feuchtlagerung b.70°C (daN/cm²) | nach 14 Tagen Feuchtlagerung bei 70°C (daN/cm²) | nach 21 Tagen Feuchtlagerung bei 70°C (daN/cm²) |
|---|---|---|---|---|
| ZES (25 Minuten bei 170°C) | 19,7 | 17,2 | 17,0 | 20,3 |
| ZES (1 Stunde bei 200°C) | 24,3 | 19,8 | 20,9 | 24,8 |
| einseitigverzinkt (25 Minuten bei 170°C) | 21,2 | 20,0 | 19,0 | 20,0 |
| einseitigverzinkt (1 Stunde bei 200°C) | 22,1 | 20,4 | 23,0 | 22,0 |

Zu den Beispielen 9 und 10

Mit den Mischungen der Komponenten A und B aus Beispiel 9 wurde die Toleranz des Klebstoffsystems gegen Änderungen der Stoechiometrie aufgezeigt. Dazu wurden die Fertigmischungen in unterschiedlichen Verhältnissen miteinander vermischt. Es wurden dann Verklebungen auf ZES-Blechplatten durchgeführt, wobei 25 Minuten bei 170 °C ausgehärtet wurden. Eine Feuchtlagerung (25 % Umgebungsfeuchtigkeit bei 70 °C während 7 Tagen) schloß sich an. Es wurden die folgenden Ergebnisse erhalten:

14

| % A | % B | Zugscherfestigkeit vor der Alterung (daN/cm$^2$) | Zugscherfestigkeit nach 7 Tagen Feuchtlagerung (daN/cm$^2$) |
|---|---|---|---|
| 11,5 | 88,5 | 12,0 | 13,0 |
| 43,8 | 56,2 | 18,7 | 18,4 |
| 47,4 | 52,6 | 18,0 | 16,2 |
| 55,9 | 44,1 | 17,6 | 20,0 |
| 84,3 | 15,7 | 17,1 | 15,3 |

Kohäsionsbrüche oder Kohäsions-/Adhäsionsbrüche

Mit den Mischungen gemäß Beispiel 10 wurden ähnliche Ergebnisse erhalten.

Zu Beispiel 11

Mit dem Mischungen gemäß Beispiel 11 wurde der Einfluß unterschiedlicher Amine auf die Abbindezeit der Vorgelierung untersucht. Es wurden die folgenden Werte erhalten:

| Katalysator | Abbindezeit |
|---|---|
| Dimethylcyclohexylamin | 20 Minuten |
| n-Dibutylamin | 25 Minuten |
| Trinpromylamin | 45 Minuten |
| Triethylamin | 1 Stunde |
| Methyl N-Morpholin | 2 Stunden |
| Dimethylamin | 1 Tag |

Zu Beispiel 14

Mit den Mischungen aus Beispiel 14 wurden die Versuche gemäß Beispiel 9 wiederholt. Zusätzlich wurden die Abbindezeiten gemessen. Daraus ergibt sich, daß der Fachmann auch die Möglichkeit hat, die Abbindezeit über die Stoechiometrie der Komponenten Polymer A und Polymer B in Grenzen zu steuern.

**Patentansprüche**

1. Flüssige oder streichfähige vulkanisierbare Kautschukmischungen auf Basis von mehreren Polymeren, von denen zumindest eines olefinisch ungesättigt ist, dadurch gekennzeichnet, daß sie enthalten
   - 30 - 70 Gew.-Teile eines Polymeren A mit im Mittel mindestens 2 Hydroxylgruppen pro Makromolekül
   - 70 - 30 Gew.-Teile eines mit A verträglichen Polymeren B mit im Mittel mindestens 2 Carbonsäure- und/oder Carbonsäureanhydridgruppen oder zumindest einer Carbonsäure und einer Carbonsäureanhydridgruppe pro Molekül
   - 10 - 120 Gew.-Teile Vulkanisationshilfsmittel und gewünschtenfalls Füllstoffe und/oder Hilfsstoffe und
   - gewünschtenfalls 0,1 - 5 Gew.-Teile Veresterungskatalysatoren,
   wobei zumindest eines der Polymeren A oder B unter üblichen Reaktionsbedingungen bei erhöhten Temperaturen über seine olefinischen Doppelbindungen vulkanisierbar ist und wobei nur eine der Komponenten A oder B sich von einem vulkanisierbaren Polydien ableitet, die andere aber ein damit verträglches Polyamid, einen Polyester oder ein Copolymerisat jeweils mit OH- und/oder Carbonsäure- oder Carbonsäureanhydridgruppen darstellt , oder die Polymeren A und B sich von Polydienen oder deren Copolymeren ableiten.

2. Kautschukmischungen nach Anspruch 1, dadurch gekennzeichnet, daß die Polymeren A und B olefinisch ungesättigt sind.

**3.** Kautschukmischungen nach einem der Ansprüche 1 und 2, dadurch gekennzeichnet, daß die Polymeren A und B sich von Polybutadien ableiten.

**4.** Kautschukmischungen nach einem der Ansprüche 1 bis 3, dadurch gekennzeichnet, daß Komponente A ein Polybutadien mit OH-Endgruppen und Komponente B ein Polybutadien mit Carbonsäure- und/oder Carbonsäureanhydridendgruppen darstellt.

**5.** Kautschukmischungen nach einem der Ansprüche 1 bis 4, dadurch gekennzeichnet, daß das stoechiometrische Verhältnis von Hydroxylgruppen zu Carboxylgruppen zwischen 0,5 : 1 und 2 : 1, vorzugsweise 0,7 : 1 und 1,5 : 1 liegt.

**6.** Kautschukmischungen nach einem der Ansprüche 1 bis 4, dadurch gekennzeichnet, daß das stoechiometrische Verhältnis Hydroxylgruppen zu Carbonsäureanhydridgruppen zwischen 0,5 : 1 und 2 : 1, vorzugsweise 0,7 : 1 und 1,5 zu 1 beträgt.

**7.** Kautschukmischungen nach einem der Ansprüche 1 bis 6, dadurch gekennzeichnet, daß die Säurezahl des Polymer B 50 bis 200, vorzugsweise 70 bis 160, beträgt.

**8.** Kautschukmischungen nach einem der Ansprüche 1 bis 7, dadurch gekennzeichnet, daß als Veresterungskatalysatoren basische Katalysatoren, vorzugsweise Amine, eingesetzt werden.

**9.** Kautschukmischungen nach einem der Ansprüche 1 bis 8, dadurch gekennzeichnet, daß als Vulkanisationshilfsmittel Schwefelverbindungen und/oder Vulkanisationskatalysatoren vorhanden sind.

**10.** Kautschukmischungen nach einem der Ansprüche 1 bis 9 , dadurch gekennzeichnet, daß als Füllstoffe rohes Zinkoxid, Calciumcarbonat und/oder Kieselsäure in Mengen von 10-80 Gew-%, bezogen auf Polymer A und B vorhanden sind.

**11.** Kautschukmischungen nach einem der Ansprüche 1 bis 10, dadurch gekennzeichnet, daß als weitere Hilfsstoffe Oxidationsinhibitoren und/oder Pigmente in Mengen von 0.1-3 Gew-%, bezogen auf Polymer A und B vorhanden sind.

**12.** Verfahren zur Herstellung eines Klebeverbundes zwischen vulkanisationsstabilen Substraten, dadurch gekennzeichnet, daß man ein Polymer A, welches gelöst oder beigemengt Veresterungskatalysatoren und/oder Oxidationsinhibitoren enthält mit einem Polymer B, welches gelöst und/oder beigement, Vulkanisationshilfsmittel und gewünschtenfalls Füll-und/oder Hilfsstoffe enthält, zu einer Kautschukmischung innig vermengt, auf die zu verklebenden Substrate aufträgt, die Substrate zusammenfügt, den Verbund unterhalb der Vulkanisationstemperatur, vorzugsweise bei Raumtemperatur oder kurz darüber oder darunter, einer Vorhärtung unterzieht, und sodann gewünschtenfalls nach Zwischenlagerung auf Vulkanisationstemperatur bringt und dabei aushärtet.

**13.** Verwendung der Kautschukmischungen nach den Ansprüchen 1 bis 11 zum Verbinden von Blechen mit vulkanisationsstabilen Kunststoffen und/oder mit sich selbst, insbesondere im Automobilbau.

**Claims**

**1.** Liquid or spreadable vulcanizable rubber mixtures based on several polymers, of which at least one is olefinically unsaturated, characterized in that they contain
- 30 to 70 parts by weight of a polymer A containing on average at least two hydroxyl groups per macromolecule
- 70 to 30 parts by weight of a polymer B compatible with A and containing on average at least two carboxylic acid and/or carboxylic anhydride groups or at least one carboxylic acid and one carboxylic anhydride group per molecule
- 10 to 120 parts by weight vulcanization auxiliaries and, optionally, fillers and/or auxiliaries and
- optionally, 0.1 to 5 parts by weight esterification catalysts,

at least one of the polymers A or B being vulcanizable under standard reaction conditions at elevated temperature through its olefinic double bonds and only one of components A and B being derived from a vulcanizable polydiene while the other is a compatible polyamide, a polyester or a copolymer

16

containing OH and/or carboxylic acid or carboxylic anhydride groups or the polymers A and B being derived from polydienes or copolymers thereof.

2. Rubber mixtures as claimed in claim 1, characterized in that polymers A and B are olefinically unsaturated.

3. Rubber mixtures as claimed in claim 1 or 2, characterized in that polymers A and B are derived from polybutadiene.

4. Rubber mixtures as claimed in any of claims 1 to 3, characterized in that component A is an OH-terminated polybutadiene while component B is a polybutadiene terminated by carboxylic acid and/or carboxylic anhydride groups.

5. Rubber mixtures as claimed in any of claims 1 to 4, characterized in that the stoichiometric ratio of hydroxyl groups to carboxyl groups is from 0.5:1 to 2:1 and preferably from 0.7:1 to 1.5:1.

6. Rubber mixtures as claimed in any of claims 1 to 4, characterized in that the stoichiometric ratio of hydroxyl groups to carboxylic anhydride groups is from 0.5:1 to 2:1 and preferably from 0.7:1 to 1.5:1.

7. Rubber mixtures as claimed in any of claims 1 to 6, characterized in that polymer B has an acid value of from 50 to 200 and preferably from 70 to 160.

8. Rubber mixtures as claimed in any of claims 1 to 7, characterized in that basic catalysts, preferably amines, are used as the esterification catalysts.

9. Rubber mixtures as claimed in any of claims 1 to 8, characterized in that sulfur compounds and/or vulcanization catalysts are present as vulcanization auxiliaries.

10. Rubber mixtures as claimed in any of claims 1 to 9, characterized in that crude zinc oxide, calcium carbonate and/or silica are present as fillers in quantities of 10 to 80% by weight, based on polymer A and B.

11. Rubber mixtures as claimed in any of claims 1 to 10, characterized in that oxidation inhibitors and/or pigments are present as further auxiliaries in quantities of 0.1 to 3% by weight, based on polymer A and B.

12. A process for the formation of an adhesive bond between vulcanization-stable substrates, characterized in that a polymer A, which contains esterification catalysts and/or oxidation inhibitors in solution or admixture, is thoroughly mixed with a polymer B, which contains vulcanizing agents and, optionally, fillers and/or auxiliaries in solution and/or admixture, to form a rubber mixture, the rubber mixture thus formed is applied to the substrates to be bonded, the substrates are fitted together, the bond is precured below the vulcanization temperature and preferably at or just above room temperature and is then brought to the vulcanization temperature, optionally after temporary storage, and cured.

13. The use of the rubber mixtures claimed in claims 1 to 11 for bonding steel plates to vulcanization-stable plastics and/or to steel plates, particularly in vehicle construction.

**Revendications**

1. Mélanges de caoutchouc vulcanisables liquides ou aptes à être étalés à base de plusieurs polymères parmi lesquels au moins un est insaturé oléfinique caractérisés en ce qu'ils contiennent :
   - 30 à 70 parties en poids d'un polymère A ayant en moyenne 2 groupes hydroxyle par macromolécule,
   - 70 à 30 parties en poids d'un polymère B compatible avec A avant en moyenne au moins 2 groupes d'acide carboxylique et/ou d'anhydride d'acide carboxylique ou au moins un acide carboxylique et un groupe d'anhydride d'acide carboxylique par molécule,
   - 10 à 120 parties en poids d'adjuvant de vulcanisation et si désiré des substances de charge et/ou des substances auxiliaires et,

si désiré 0,1 à 5 parties en poids de catalyseurs d'estérification ,

mélanges dans lesquels au moins un des polymères A ou B est vulcanisable dans les conditions habituelles de réaction à température élevée par l'intermédiaire de ses doubles liaisons oléfiniques et dans lesquels seulement un des composants A ou B dérive d'un polydiène vulcanisable, l'autre représente cependant un polyamide compatible avec celui-ci, un polyester, ou un copolymère respectivement avec des groupes OH, et/ou d'acide carboxylique ou des groupes d'anhydride d'acide carboxylique, ou bien les polymères A et B dérivent des polydiènes ou de leurs copolymères.

2. Mélanges de caoutchouc selon la revendication 1, caractérisés en ce que les polymères A et B ne sont pas saturés oléfiniquement.

3. Mélanges de caoutchouc selon l'une des revendications 1 et 2, caractérisés en ce que les polymères A et B dérivent du polybutadiène.

4. Mélanges de caoutchouc selon l'une des revendications 1 à 3, caractérisés en ce que le composant A représente un polybutadiène avec des groupes terminaux -OH et le composant B un polybutadiène avec des groupes d'acide carboxylique et/ou d'anhydride d'acide carboxylique.

5. Mélanges de caoutchouc selon l'une des revendications 1 à 4, caractérisés en ce que le rapport stoechiométrique des groupes hydroxyle aux groupes carboxyle, se situe entre 0,5:1 et 2:1, de préférence entre 0,7:1 et 1,5:1.

6. Mélanges de caoutchouc selon l'une des revendications 1 à 4, caractérisés en ce que le rapport stoechiométrique des groupes hydroxyle aux groupes d'anhydride d'acide carboxylique se situe entre 0,5:1 et 2:1, de préférence entre 0,7:1 et 1,5:1.

7. Mélanges de caoutchouc selon l'une des revendications 1 à 6, caractérisés en ce que l'indice d'acidité du polymère B s'élève de 50 à 200, de préférence de 70 à 160.

8. Mélanges de caoutchouc selon l'une des revendications 1 à 7, caractérisés en ce que comme catalyseurs d'estérification, on met en oeuvre des catalyseurs basiques, de préférence des amines.

9. Mélanges de caoutchouc selon l'une des revendications 1 à 8, caractérisés en ce que comme adjuvant de vulcanisation sont présents des composés du soufre et/ou des catalyseurs de vulcanisation

10. Mélanges de caoutchouc selon l'une des revendications 1 à 9, caractérisés en ce que comme substances de charge, sont présents l'oxyde de zinc brut, du carbonate de calcium et/ou de l'acide silicique en quantités allant de 10 à 80 % en poids, rapportées aux polymères A et B.

11. Mélanges de caoutchouc selon l'une des revendications 1 à 10, caractérisés en ce que comme substances auxiliaires supplémentaires sont présents des inhibiteurs d'oxydation et/ou des pigments en quantités allant de 0,11 à 3 % en poids, rapportées aux polymères A et B.

12. Procédé d'obtention d'un composite de colle entre des substrats stables à la vulcanisation, caractérisé en ce qu'on mélange intimement en un mélange de caoutchouc, un polymère A qui contient des catalyseurs d'estérification et/ou des inhibiteurs d'oxydation dissouts ou mélangés, avec un polymère B renfermant un adjuvant de vulcanisation et si désiré des substances de remplissage, des substances auxiliaires, dissouts et/ou mélangés en ce qu'on l'applique sur les substrats à coller, que l'on assemble les substrats, que l'on soumet le composite en-dessous de la température de vulcanisation, de préférence à température ambiante ou peu au-dessus ou en-dessous, à un prédurcissement, et ensuite si désiré après un stockage intermédiaire on l'amène à la température de vulcanisation et il durcit ainsi.

13. Utilisation des mélanges de caoutchouc selon les revendications 1 à 11 pour le collage de tôles avec des matières plastiques stables à la vulcanisation et/ou entre elles, en particulier dans la construction automobile.